# EUROPÄISCHE PATENTSCHRIFT

(11) **EP 2 078 586 B1**
(45) Veröffentlichungstag und Bekanntmachung des Hinweises auf die Patenterteilung: **12.01.2011**
(21) Anmeldenummer: 08000523.4
(22) Anmeldetag: 12.01.2008
(51) Int. Cl.: B23K 26/14

(54) **Laserbearbeitungsmaschine mit Düsenwechseleinrichtung**
Laser processing machine with device for nozzle swapping
Machine de traitement laser dotée d'un dispositif de changement de tuyère

(43) Veröffentlichungstag der Anmeldung: 15.07.2009
(73) Patentinhaber: TRUMPF Werkzeugmaschinen GmbH + Co. KG, 71254 Ditzingen (DE)
(72) Erfinder: Schmauder, Frank, 72555 Metzingen (DE)
(74) Vertreter: Kohler Schmid Möbus

(56) Entgegenhaltungen:
- EP-A- 1 602 439
- JP-A- 6 023 580

## Beschreibung

Die Erfindung betrifft eine Laserbearbeitungsmaschine zum Bearbeiten von Werkstücken, insbesondere von Blechen,
- mit einem Laserbearbeitungskopf, der eine Düsenaufnahme für eine Laserdüse aufweist,
- mit einer Werkstückauflage für zu bearbeitende und/oder für bearbeitete Werkstücke, die eine Werkstück-Auflageebene ausbildet sowie
- mit einer Düsenwechseleinrichtung, die ein Düsenmagazin mit wenigstens einem Düsenlagerplatz für eine Laserdüse umfasst und die an der von dem Laserbearbeitungskopf abliegenden Seite (Unterseite) der Werkstück-Auflageebene angeordnet ist,
wobei eine Laserdüse zwischen dem Düsenmagazin der Düsenwechseleinrichtung und der Düsenaufnahme des Laserbearbeitungskopfes transferierbar und an der Düsenaufnahme montierbar oder demontierbar ist.

Aus JP 06 023580 A ist eine Laserbearbeitungsmaschine bekannt, im Falle derer eine Düsenwechseleinrichtung mit mehreren Lagerplätzen für jeweils eine Laserdüse an der einem Laserbearbeitungskopf zugewandten Oberseite eines Werkstücktisches angebracht ist. Zur Vermeidung einer Behinderung der durchzuführenden Laserbearbeitung ist die Düsenwechseleinrichtung außerhalb des Arbeitsbereiches des Laserbearbeitungskopfes angeordnet. Zum Düsenwechsel fährt entweder der Laserbearbeitungskopf die Düsenwechseleinrichtung an, oder die Düsenwechseleinrichtung wird durch Verfahren des Werkstücktisches zu dem Laserbearbeitungskopf hin bewegt.

Gattungsgemäßer Stand der Technik ist offenbart in EP 1 602 439 A2. Die aus dieser Druckschrift bekannte Maschine weist eine Düsenwechseleinrichtung auf, die als Teil einer Rüststation neben einer Werkstückauflage oder am Rand einer Werkstückauflage angeordnet ist. In beiden Fällen muss der Laserbearbeitungskopf der Maschine zum Düsenwechsel über eine verhältnismäßig lange Wegstrecke in eine Werkzeug- bzw. Düsenwechselposition verfahren.

Den Grad der Integration der Düsenwechseleinrichtung in die Gesamtmaschine zu erhöhen, hat sich die vorliegende Erfindung ausgehend von dem gattungsgemäßen Stand der Technik zum Ziel gesetzt.

Erfindungsgemäß gelöst wird diese Aufgabe durch die Laserbearbeitungsmaschine nach Patentanspruch 1. Die Düsenwechseleinrichtung ist an der Unterseite der von der Werkstückauflage definierten Werkstück-Auflageebene angeordnet. Aufgrund dieser Anordnung erzeugt die Düsenwechseleinrichtung keine Störkontur bei dem regulären Maschinenbetrieb, d.h. bei der Werkstückbearbeitung mittels des Laserbearbeitungskopfs. Aufgrund der Erfindungsmerkmale kann die Düsenwechseleinrichtung permanent in der Nähe des Laserbearbeitungskopfes verbleiben. Die Düsenwechseleinrichtung ist in das funktionelle Zentrum der Laserbearbeitungsmaschine integriert. Bei etwaigen, zum Düsenwechsel auszuführenden Relativbewegungen von Laserbearbeitungskopf und Düsenwechseleinrichtung sind lediglich kurze Wege zurückzulegen. Zudem ist die Düsenwechseleinrichtung an der Unterseite der Werkstück-Auflageebene gegen schädliche Einflüsse, beispielsweise gegen Verschmutzung und unerwünschte mechanische Beanspruchung, geschützt.

Besondere Ausführungsarten der Erfindung gemäß Patentanspruch 1 ergeben sich aus den abhängigen Patentansprüchen 2 bis 9.

Aufgrund der Anordnung der Düsenwechseleinrichtung unterhalb der Werkstück-Auflageebene sind im Falle der Erfindung besondere Maßnahmen zu treffen, um die für den Düsenwechsel erforderliche räumliche Nähe von Laserbearbeitungskopf und Düsenwechseleinrichtung herzustellen. Erfindungsgemäß denkbar ist eine Beweglichkeit des Laserbearbeitungskopfes, die es gestattet, den Laserbearbeitungskopf und die Düsenwechseleinrichtung ausschließlich durch eine Bewegung des Laserbearbeitungskopfes in eine Relativlage zu überführen, bei welcher ein Düsenwechsel durchgeführt werden kann.

Erfindungsgemäß bevorzugt wird ausweislich Patentanspruch 2 die Verwendung einer Düsenwechseleinrichtung, die neben einem Düsenmagazin auch eine Handlingeinreichung umfasst, mittels derer eine Laserdüse zwischen dem Düsenmagazin der Düsenwechseleinrichtung und der Düsenausnahme des Laserbearbeitungskopfes transferierbar ist und außerdem auch an der Düsenaufnahme montierbar oder demontierbar sein kann.

Durch einen besonders hohen Grad der Integration der Düsenwechseleinrichtung in die Gesamtanordnung zeichnet sich die Erfindungsbauart nach Patentanspruch 3 aus. Bewegungsmöglichkeiten, die an Laserbearbeitungsmaschinen ohnehin bestehen, werden zusätzlich dazu genutzt, die Düsenwechseleinrichtung und den Laserbearbeitungskopf relativ zueinander in eine Wechselposition und/oder in eine Parkposition zu bewegen. In der Regel ist die Düsenwechseleinrichtung bei Einnahme der Wechselposition bearbeitungskopfnah angeordnet und in der Parkposition weiter von dem Laserbearbeitungskopf beabstandet. Wird die Parkposition bei regulärem Maschinenbetrieb eingenommen, so ist die Düsenwechseleinrichtung in der Parkposition gegen schädliche bearbeitungsbedingte Einflüsse, beispielsweise gegen Schlacke- und Materialspritzer beim Laserschneiden von Metallblechen, weitgehend geschützt.

Eine Relativbewegung von Werkstückauflage und Laserbearbeitungskopf kann auf unterschiedliche Art und Weise erzeugt werden. Erfindungsgemäß bevorzugt wird ausweislich Patentanspruch 4 eine Laserbearbeitungsmaschine, deren Werkstückauflage gegenüber dem Laserbearbeitungskopf bewegbar ist. Die Düsenwechseleinrichtung ist mit der Werkstückauflage bewegungsverbunden und durch eine Bewegung der Werkstückauflage in eine Wechselposition und/oder in eine Parkposition überführbar. Im Falle dieser Erfindungsbauart dient ein ohnehin vorhandener Antrieb für die Werkstückauflage auch als Antrieb für die Düsenwechseleinrichtung.

Der gleichzeitig als Antrieb für die Düsenwechseleinrichtung genutzte Antrieb der Werkstückauflage kann unterschiedlichen Zwecken dienen. Gemäß Patentanspruch 5 ist in weiterer bevorzugter Ausgestaltung der Erfindung vorgesehen, dass zum Antrieb der Düsenwechseleinrichtung ein Antrieb verwendet wird, der ansonsten dazu dient, die Werkstückauflage gemeinsam mit einer Einrichtung zum Ausschleusen von Produkten der Werkstückbearbeitung relativ zu dem Laserbearbeitungskopf zu bewegen. Bei einer derartigen Ausschleuseinrichtung kann es sich beispielsweise um eine Klappe handeln, die während der Werkstückbearbeitung eine Ausschleusöffnung der Maschine verschließt und die in Abhängigkeit von der Größe des auszuschleusenden Teils durch Verfahren der Werkstückauflage und damit verbundene Bewegung relativ zu dem Laserbearbeitungskopf in unterschiedliche Positionen zugestellt wird.

Auf besonders einfache Art und Weise ist eine bewegungsmäßige Kopplung von Düsenwechseleinrichtung und Werkstückauflage dann realisiert, wenn die Düsenwechseleinrichtung mit der Werkstückauflage verbunden ist (Patentanspruch 6).

In vorteilhafter Ausgestaltung der Erfindung ist die Düsenwechseleinrichtung relativ zu der Werkstückauflage bewegbar (Patentanspruch 7). Eine derartige Beweglichkeit der Düsenwechseleinrichtung ist insbesondere dann von Vorteil, wenn eine Relativbewegung von Werkstückauflage und Laserbearbeitungskopf nicht ausreicht, um die Düsenwechseleinrichtung in eine Sollposition, beispielsweise in eine Wechselposition oder in eine Parkposition, zu überführen. In diesen Fällen wird die Zustellbewegung der Düsenwechseleinrichtung zum Teil durch eine Relativbewegung von Werkstückauflage und Laserbearbeitungskopf und zum Teil durch eine Bewegung der Düsenwechseleinrichtung gegenüber der Werkstückauflage erzeugt. Die Teilbewegungen können einander überlagert werden.

Nachdem sich der Laserbearbeitungskopf bei regulärem Maschinenbetrieb oberhalb der Werkstück-Auflageebene befindet und nachdem die Düsenwechseleinrichtung erfindungsgemäß an der Unterseite der Werkstück-Auflageebene angeordnet ist, empfiehlt es sich, den Transfer von Laserdüsen zwischen dem Düsenmagazin der Düsenwechseleinrichtung und der Düsenaufnahme des Laserbearbeitungskopfes in Querrichtung der Werkstück-Auflageebene auszuführen. Entsprechend wird in bevorzugter Ausgestaltung der Erfindung die erfindungsgemäße Handlingeinrichtung eingesetzt (Patentanspruch 8).

Im Falle der Erfindung kann die von Laserdüsen beim Düsenwechsel in Querrichtung der Werkstück-Auflageebene auszuführende Bewegung auf verschiedene Art und Weise erzeugt werden. Denkbar ist eine Düsenbewegung ausschließlich mittels des Laserbearbeitungskopfes, der in diesem Fall hinreichend weit unter die Werkstück-Auflageebene abzusenken ist. Möglich ist weiterhin eine Düsenbewegung, die teilweise mittels der Handlingeinrichtung der Düsenwechseleinrichtung und teilweise mittels des Laserbearbeitungskopfes bewerkstelligt wird. Auch in dem letztgenannten Fall kann der Laserbearbeitungskopf unter die Werkstück-Auflageebene abzusenken sein. Erfindungsgemäß bevorzugt wird ausweislich Patentanspruch 9 die Verwendung einer Handlingeinrichtung, mittels derer Laserdüsen durch die Werkstück-Auflageebene hindurch zwischen dem Düsenmagazin der Düsenwechseleinrichtung und der Düsenaufnahme des Laserbearbeitungskopfes transferierbar sind. In diesem Fall bedarf es beim Düsenwechsel keiner oder allenfalls einer nur geringen Bewegung des Laserbearbeitungskopfes in Querrichtung der Werkstück-Auflageebene.

Nachstehend wird die Erfindung anhand beispielhafter schematischer Darstellungen näher erläutert. Es zeigen:
- Fig. 1:: eine Gesamtdarstellung einer Laserbearbeitungsmaschi- ne mit einer Laserschneidstation sowie mit einer zusätz- lichen Bearbeitungsstation,
- Fig. 2:: eine Teildarstellung einer Laser-Schneidstation erster Bauart mit einer Düsenwechseleinrichtung,
- Fig. 3:: die Düsenwechseleinrichtung gemäß Figur 2 in der An- sicht in Richtung des Pfeils III in Figur 2,
- Fign. 4 bis 8:: Darstellungen zur Veranschaulichung eines Düsenwech- sels an der Laser-Schneidstation gemäß Figur 2,
- Fig. 9:: eine Teildarstellung einer Laser-Schneidstation zweiter Bauart mit einer Düsenwechseleinrichtung,
- Fig. 10:: die Düsenwechseleinrichtung gemäß Figur 9 in der An- sicht in Richtung des Pfeils X in Figur 9 und
- Fign. 11 bis 15:: Darstellungen zur Veranschaulichung eines Düsenwech- sels an der Laser-Schneidstation gemäß Figur 9.

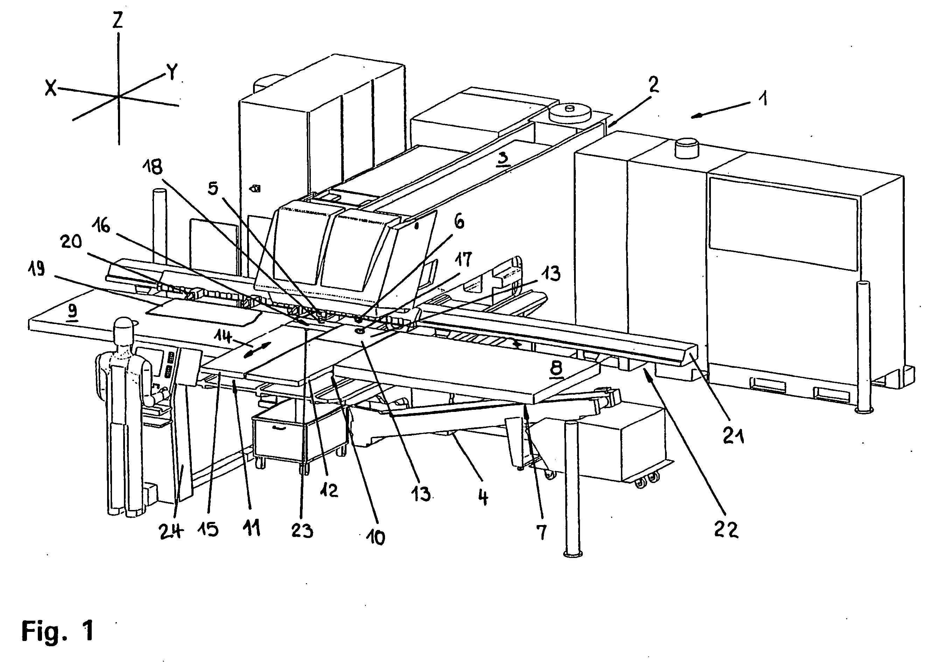

Ausweislich Figur 1 besitzt eine Laserbearbeitungsmaschine 1 ein Maschinengestell 2 mit einem oberen Gestellschenkel 3 und einem unteren Gestellschenkel 4. An dem freien Ende des oberen Gestellschenkels 3 sind nebeneinander ein als Laserschneidkopf 5 ausgeführter Laserbearbeitungskopf sowie als zusätzliche Bearbeitungseinrichtung ein Stanzkopf 6 vorgesehen. Bei der Laserbearbeitungsmaschine 1 handelt es sich demnach um eine sogenannte "Kombi-Maschine".

Der untere Gestellschenkel 4 lagert einen Werkstücktisch 7. Seitentische 8, 9 des Werkstücktisches 7 sind in horizontaler Y-Richtung an dem unteren Gestellschenkel 4 beweglich geführt. Wischen den Seitentischen 8, 9 sind eine Stanzauflage 10 sowie eine Schneidauflage 11 des Werkstücktisches 7 angeordnet. Die Stanzauflage 10 umfasst einen gestellfesten Auflageteil 12 sowie eine um eine horizontale Achse schwenkbare Ausschleusklappe 13. Teile der Schneidauflage 11 sind eine in Richtung eines Doppelpfeils 14 verschiebbare Werkstückauflage 15 sowie eine falltürartige Doppelklappe 16.

In die Ausschleusklappe 13 der Stanzauflage 10 ist eine Stanzmatrize 17 integriert. Diese wirkt zur Werkstückbearbeitung mit dem Stanzkopf 6 zusammen. Entsprechend ist die falltürartige Doppelklappe 16 der Schneidauflage 11 mit einer Strahlaufnahme 18 für den von dem Laserschneidkopf 5 auf zu bearbeitende Werkstücke gerichteten Laserstrahl versehen.

Zu bearbeiten ist in dem gezeigten Beispielsfall ein andeutungsweise dargestelltes Blech 19. Das Blech 19 ruht auf dem Werkstücktisch 7. Es wird in bekannter Weise von Spannpratzen 20 gehalten, die ihrerseits an einer Querschiene 21 einer Koordinatenführung 22 üblicher Bauart in horizontaler X-Richtung beweglich geführt sind. In Y-Richtung ist die Querschiene 21 der Koordinatenführung 22 gemeinschaftlich mit den Seitentischen 8, 9 verfahrbar. Durch entsprechende Bewegung der Spannpratzen 20 in X-Richtung lässt sich das von den Spannpratzen 20 gehaltene Blech 19 relativ zu dem Werkstücktisch 7 in X-Richtung bewegen. Auf diese Art und Weise ermöglicht die Koordinatenführung 22 in der von der X-Richtung sowie von der Y-Richtung aufgespannten Horizontalebene eine Positionierung des Bleches 19 gegenüber dem Laserschneidkopf 5 und der Strahlaufnahme 18 sowie gegenüber dem Stanzkopf 6 und der Stanzmatrize 17.

Bei seiner Bewegung über den Werkstücktisch 7 ist das Blech 19 auf nicht im Einzelnen gezeigten Bürsten des Werkstücktisches 7 reibungsarm gelagert. Die genannten Bürsten sind im Bereich der Stanzmatrize 17 an der Ausschleusklappe 13 der Stanzauflage 10 sowie im Bereich der Strahlaufnahme 18 an der falltürartigen Doppelklappe 16 der Schneidauflage 11 ausgespart. Weiterhin ausgespart sind die Bürsten des Werkstücktisches 7 im Bereich einer in Figur 1 nur andeutungsweise erkennbaren Durchtrittsöffnung 23 an der beweglichen Werkstückauflage 15 der Schneidauflage 11.

Alle wesentlichen Funktionen der Laserbearbeitungsmaschine 1 sind numerisch gesteuert. Zu diesem Zweck ist eine CNC-Steuerung 24 vorgesehen.

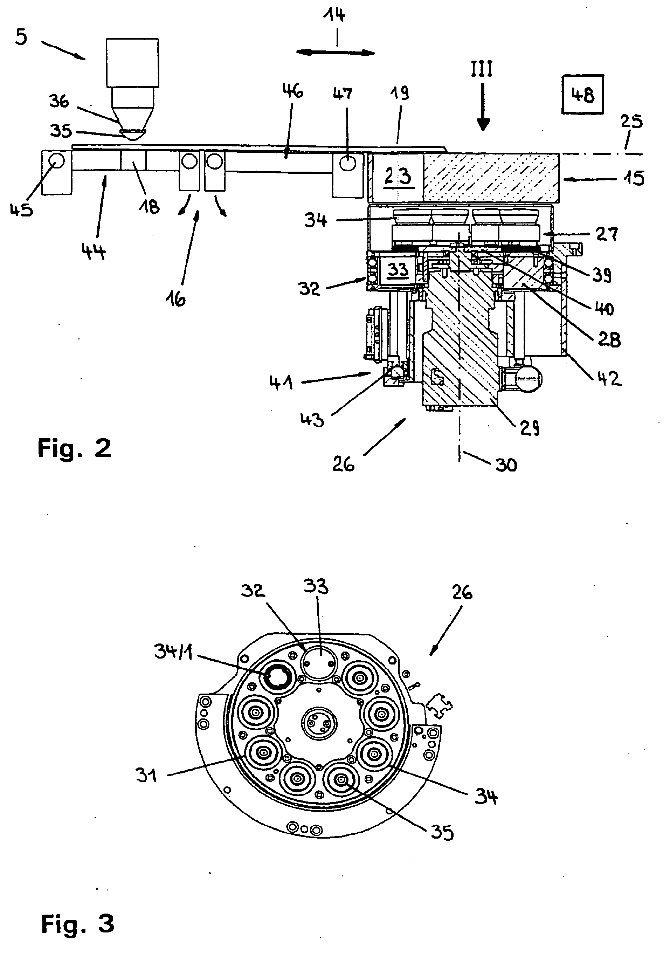

Wie aus Figur 2 hervorgeht, ist an der Werkstückauflage 15 der Schneidauflage 11 unterhalb einer von der Werkstückauflage 15 definierten Werkstück-Auflageebene 25 eine Düsenwechseleinrichtung 26 angebracht. Die Düsenwechseleinrichtung 26 umfasst ein Düsenmagazin 27, das ausweislich Figur 3 als Revolvermagazin ausgeführt ist. Ein Magazinrevolver 28 ist mittels eines in seiner Drehrichtung umschaltbaren Antriebsmotors 29 um eine Revolverdrehachse 30 drehbar. In Drehrichtung folgen an dem Magazinrevolver 28 eine Mehrzahl von Magazinstationen 31 aufeinander. Eine der Magazinstationen 31 ist als so genannte "Blindstation" 32 ausgebildet und weist einen sich in Richtung der Revolverdrehachse 30 erstreckenden Durchlasskanal 33 auf. Die übrigen Magazinstationen 31 des Magazinrevolvers 28 sind als Düsenlagerplätze vorgesehen und als solche mit jeweils einem Düsenhalter 34 bestückt. Gemäß Figur 3 ist einer der Düsenhalter 34 (Düsenhalter 34/1) leer, in jedem der übrigen Düsenhalter 34 ist eine Laserdüse 35 angeordnet. Eine entsprechende Laserdüse 35 ist ausweislich Figur 2 in eine Düsenaufnahme 36 des Laserschneidkopfes 5 eingeschraubt.

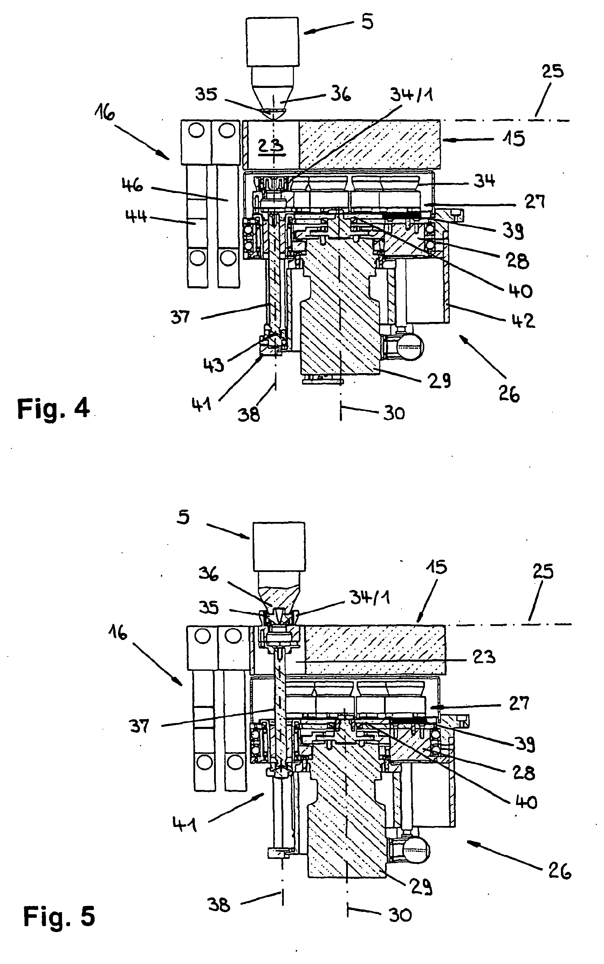

Wie beispielsweise Figur 4 entnommen werden kann, besitzt jeder Düsenhalter 34 einen Schaft 37. Dieser ist Teil einer Handlingeinrichtung, mittels derer Laserdüsen 35 zwischen dem Düsenmagazin 27 der Düsenwechseleinrichtung 26 und dem Laserschneidkopf 5 transferiert und an der Düsenaufnahme 36 des Laserschneidkopfes 5 montiert oder demontiert werden. Über den Schaft 37 ist jeder der Düsenhalter 34 um eine Schaftachse 38 drehbar an dem Magazinrevolver 28 gelagert. Zum Drehantrieb eines Schaftes 37 sowie des damit verbundenen Düsenhalters 34 dient jeweils ein außenverzahntes Planetenrad 39, in welches ein gleichfalls außenverzahntes Sonnenrad 40 eingreift. Das Sonnenrad 40 ist mittels des Antriebsmotors 29 um die Revolverdrehachse 30 in einander entgegengesetzten Richtungen antreibbar. In Figur 3 sind die Planetenräder 39 und das Sonnenrad 40 verdeckt angeordnet.

Eine Hubeinrichtung 41 ist bezüglich der Revolverdrehachse 30 drehfest an einem Motorgehäuse 42 des Antriebsmotors 29 angebracht. Sie besitzt eine in der Drehrichtung des Magazinrevolvers 28 offene Schaftaufnahme 43 für den Schaft 37 der Düsenhalter 34. Mittels einer nicht im Einzelnen gezeigten pneumatischen Kolben-Zylinder-Einheit kann die Schaftaufnahme 43 parallel zu der Schaftachse 38 bzw. der damit gleichgerichtet verlaufenden Revolverdrehachse 30 bewegt werden.

Figur 2 zeigt die Verhältnisse an der Schneidstation der Laserbearbeitungsmaschine 1 bei regulärem Schneidbetrieb. Die falltürartige Doppelklappe 16 ist geschlossen und lagert an ihrer Oberseite gemeinsam mit der Werkstückauflage 15 sowie mit weiteren Teilen des Werkstücktisches 7 das Blech 19. Ein gestellseitiger Flügel 44 der falltürartigen Doppelklappe 16 ist um eine gestellfeste Schwenkachse 45 schwenkbar an dem Maschinengestell 2 angelenkt. Als weitere Einrichtung zum Ausschleusen von Produkten der Werkstückbearbeitung ist ein auflageseitiger Flügel 46 der falltürartigen Doppelklappe 16 um eine auflageseitige Schwenkachse 47 schwenkbar mit der Werkstückauflage 15 der Schneidauflage 11 verbunden. In Richtung des Doppelpfeils 14 ist die Werkstückauflage 15 in eine Position zugestellt, bei weicher der gestellseitige Flügel 44 und der auflageseitige Flügel 46 der falltürartigen Doppelklappe 16 nur geringfügig voneinander beabstandet sind. Die Position der Werkstückauflage 15 wird abgestimmt auf die Dimensionen der über die falltürartige Doppelklappe 16 auszuschleusenden Werkstückteile gewählt. Bei entsprechenden Abmessungen der auszuschleusenden Werkstückteile kann die Werkstückauflage 15 und mit dieser der auflageseitige Flügel 46 der falltürartigen Doppelklappe 16 in Figur 2 nach rechts versetzt angeordnet sein. Zur Realisierung der Zustellbewegung der Werkstückauflage 15 in Richtung des Doppelpfeils 14 und damit relativ zu dem Laserschneidkopf 5 dient ein in Figur 2 angedeuteter motorischer Auflageantrieb 48.

Der Laserschneidkopf 5 ist bei regulärem Schneidbetrieb mit der Laserdüse 35 oberhalb der an dem gestellseitigen Flügel 44 der falltürartigen Doppelklappe 16 vorgesehenen Strahlaufnahme 18 angeordnet. Die Düsenwechseleinrichtung 26 liegt mit der Blindstation 32 unterhalb der Durchtrittsöffnung 23 an der Werkstückauflage 15. Dementsprechend fluchtet der Durchlasskanal 33 der Blindstation 32 mit der Durchtrittsöffnung 23 der Werkstückauflage 15. Verschmutzungen, beispielsweise bei der schneidenden Blechbearbeitung anfallende Schlacke- oder Metallspritzer, können von der Oberseite der Werkstückauflage 15 her durch die Durchtrittsöffnung 23 der Werkstückauflage 15 und den sich daran anschließenden Durchlasskanal 33 der Blindstation 32 hindurchfallen und dadurch den Arbeitsbereich der Laserbearbeitungsmaschine 1 unter Schwerkraftwirkung verlassen.

Durch die Laserdüse 35 des Laserschneidkopfes 5 hindurch wird in bekannter Weise der als Schneidwerkzeug genutzte Laserstrahl auf das zu bearbeitende Blech 19 gerichtet. Außerdem wird durch die Laserdüse 35 Schneidgas in Richtung auf die Bearbeitungsstelle des Laserstrahls an dem Blech 19 aufgegeben.

Beispielsweise bei einem Wechsel des zu bearbeitenden Materials bzw. bei einem Wechsel der zu bearbeitenden Materialdicke oder auch verschleißund/oder verschmutzungsbedingt ist die Laserdüse 35 an dem Laserschneidkopf 5 gegen eine Laserdüse 35 aus dem Düsenmagazin 27 der Düsenwechseleinrichtung 26 auszutauschen. Für den Düsenwechsel wird in aller Regel eine ohnehin eingetretene Unterbrechung der schneidenden Werkstückbearbeitung genutzt. An der Oberseite der Schneidauflage 11 ist zum Zeitpunkt des Düsenwechsels kein Werkstück angeordnet.

Zum Düsenwechsel werden ausgehend von der Situation gemäß Figur 2 der gestellseitige Flügel 44 sowie der auflageseitige Flügel 46 der falltürartigen Doppelklappe 16 in Öffnungsrichtung nach unten geschwenkt, bis sie vertikal ausgerichtet sind. Mittels des Auflageantriebes 48 wird anschließend die Werkstückauflage 15 gemeinschaftlich mit dem geöffneten auflageseitigen Flügel 46 der falltürartigen Doppelklappe 16 in Figur 2 nach links bewegt, bis der auflageseitige Flügel 46 in unmittelbarer Nachbarschaft zu dem gestellseitigen Flügel 44 der falltürartigen Doppelklappe 16 zu liegen kommt. Damit einher geht eine Bewegung der Düsenwechseleinrichtung 26 aus der Parkposition gemäß Figur 2 in die (Düsen-) Wechselposition.

Hat die Werkstückauflage 15 in Verschieberichtung ihre Endposition erreicht, so ist der Laserschneidkopf 5 mit der auszuwechselnden Laserdüse 35 über der Durchtrittsöffnung 23 der Werkstückauflage 15 angeordnet. In dem gezeigten Beispielsfall wird nun der Laserschneidkopf 5 in vertikaler Richtung (Z-Achse) abgesenkt, bis die Spitze der an dem Laserbearbeitungskopf 5 montierten Laserdüse 35 auf Höhe der Werkstück-Auflageebene 25 liegt.

Gleichzeitig mit der Zustellbewegung der Werkstückauflage 15 wird an der Düsenwechseleinrichtung 26 auf der Unterseite der Werkstückauflage 15 der Magazinrevolver 28 so weit um die Revolverdrehachse 30 gedreht, bis der leere Düsenhalter 34/1 eine Position unterhalb der Durchtrittsöffnung 23 der Werkstückauflage 15 einnimmt und somit in der Wechselposition der auszuwechselnden Laserdüse 35 gegenüberliegt. Zu der beschriebenen Dreheinstellung des Magazinrevolvers 28 dient der Antriebsmotor 29, der zu diesem Zweck mit dem Magazinrevolver 28 gekuppelt ist.

Aufgrund der Drehbewegung des Magazinrevolvers 28 läuft der an dem leeren Düsenhalter 34 vorgesehene Schaft 37 in die Schaftaufnahme 43 der Hubeinrichtung 41 ein. Damit ergeben sich die Verhältnisse gemäß Figur 4.

Bei diesem Betriebszustand der Düsenwechseleinrichtung 26 wird die Hubeinrichtung 41 betätigt und der leere Düsenhalter 34/1 bewegt sich durch die Durchtrittsöffnung 23 der Werkstückauflage 15 hindurch nach oben, bis er die auszuwechselnde Laserdüse 35 umschließt (Figur 5).

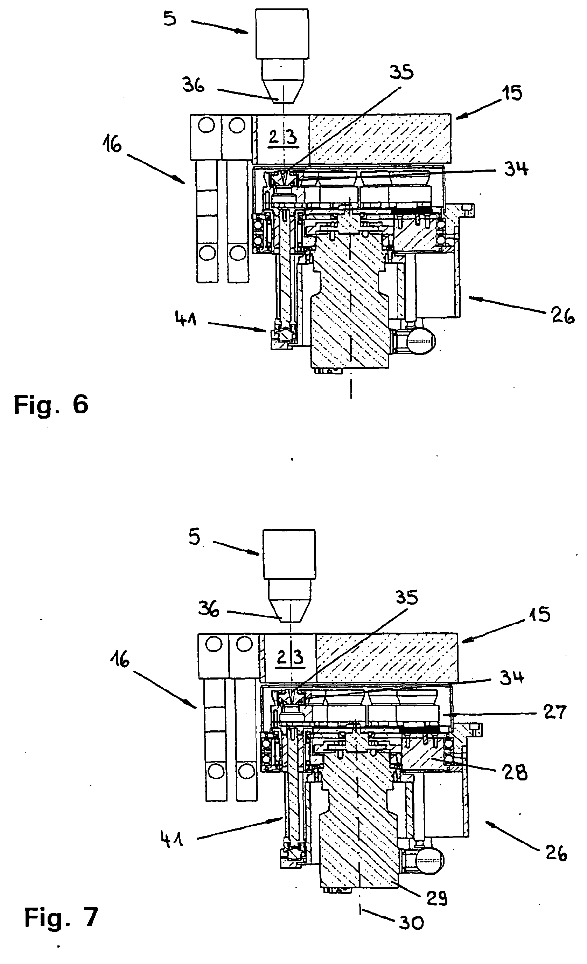

Inzwischen wurde die Kupplung zwischen dem Antriebsmotor 29 und dem Magazinrevolver 28 der Düsenwechseleinrichtung 26 gelöst und der Magazinrevolver 28 vorübergehend in seiner momentanen Drehstellung arretiert. Bei gelöster Kupplung wird der Antriebsmotor 29 in Gang gesetzt. Über das Sonnenrad 40 treibt der Antriebsmotor 29 unter anderem das dem nach oben ausgefahrenen Schaft 37 zugeordnete Planetenrad 39 um die Schaftachse 38 an. Aufgrund eines Formschlusses zwischen dem Planetenrad 39 und dem nach oben ausgefahrenen Schaft 37 werden der Schaft 37 und der an diesem vorgesehene Düsenhalter 34 mit der darin befindlichen Laserdüse 35 um die Schaftachse 38 angetrieben. Die Drehrichtung des Antriebsmotors 29 ist derart gewählt, dass sich an dem nach oben ausgefahrenen Düsenhalter 34 eine Drehrichtung ergibt, aufgrund derer die auszuwechselnde Laserdüse 35 aus der Düsenaufnahme 36 des Laserschneidkopfes 5 ausgeschraubt wird. Von dem Düsenhalter 34 wird die Laserdüse 35 aufgrund entsprechender Konturierung des Außenumfanges der Laserdüse 35 einerseits und des Innenumfangs des Düsenhalters 34 andererseits in Drehrichtung mitgenommen. Nach dem Lösen der auszuwechselnden Laserdüse 35 wird der nach oben ausgefahrene Düsenhalter 34 gemeinsam mit der von ihm aufgenommenen Laserdüse 35 unter entsprechender Betätigung der Hubeinrichtung 41 in seine Ausgangsposition unterhalb der Werkstückauflage 15 abgesenkt (Figur 6).

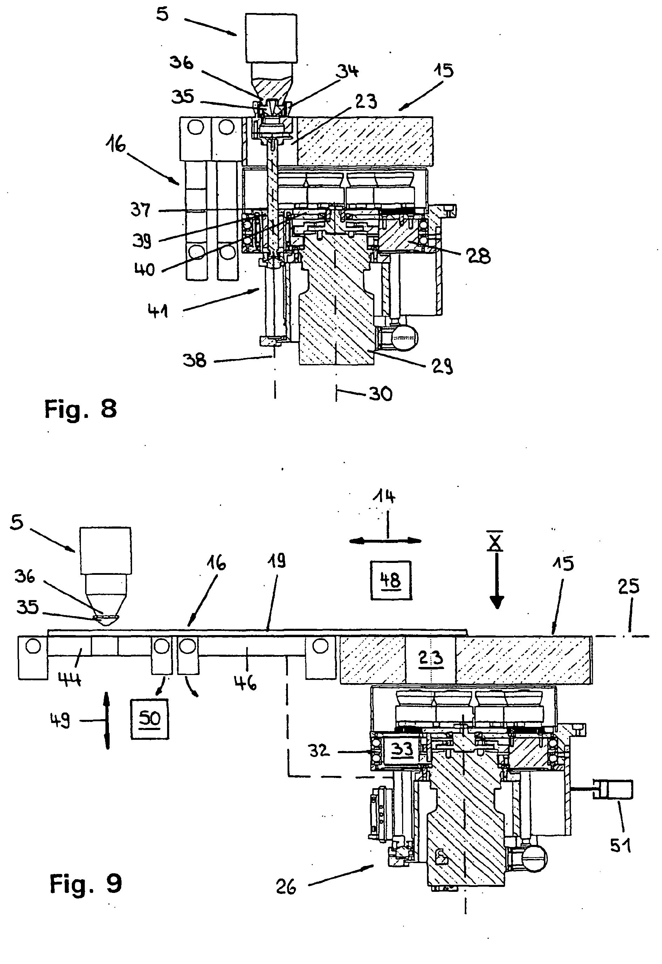

Anschließend wird der Magazinrevolver 28 des Düsenmagazins 27 in seiner Drehrichtung entriegelt und wieder an den Antriebsmotor 29 der Düsenwechseleinrichtung 26 angekuppelt. Mittels des Antriebsmotors 29 wird dann der Magazinrevolver 28 um die Revolverdrehachse 30 gedreht, bis der dem Düsenhalter 34 mit der demontierten Laserdüse 35 in Drehrichtung unmittelbar benachbarte und eine neue Laserdüse 35 aufnehmende Düsenhalter 34 unterhalb der Durchtrittsöffnung 23 der Werkstückauflage 15 angeordnet ist (Figur 7). Danach wird erneut die Hubeinrichtung 41 betätigt. Infolgedessen bewegt sich der Düsenhalter 34 mit der neuen Laserdüse 35 ausgehend von seiner Position gemäß Figur 7 nach oben. Die Laserdüse 35 im Innern des nach oben bewegten Düsenhalters 34 setzt mit dem zu dem Laserschneidkopf 5 hin liegenden Ende ihres Gewindeansatzes auf dem unteren Ende der Düsenaufnahme 36 an dem Laserschneidkopf 5 auf. Dabei stützt sich der Gewindeansatz der Laserdüse 35 in Richtung der Schaftachse 38 federnd an dem Rand der Düsenaufnahme 36 des Laserschneidkopfes 5 ab. Ist der Magazinrevolver 28 erneut in Drehrichtung arretiert und von dem Antriebsmotor 29 der Düsenwechseleinrichtung 26 abgekuppelt und wird der Antriebsmotor 29 mit entsprechender Drehrichtung betrieben, so wird der nach oben ausgefahrene Düsenhalter 34 über seinen Schaft 37 sowie über dessen Planetenrad 39 und das Sonnenrad 40 um die Schaftachse 38 gedreht. Infolge dieser Drehbewegung schraubt sich der Gewindeansatz der an dem Laserschneidkopf 5 angesetzten Laserdüse 35 in die Düsenaufnahme 36 ein. Die von der Laserdüse 35 beim Einschrauben in die Düsenaufnahme 36 auszuführende Bewegung in axialer Richtung wird durch die in dieser Richtung wirksame Federkraftbeaufschlagung der Laserdüse 35 bewirkt. Nach einer vorgegebenen Anzahl von Umdrehungen ist die Laserdüse 35 in der Düsenaufnahme 36 des Laserschneidkopfes 5 fixiert (Figur 8). Der Antriebsmotor 29 wird stillgesetzt, ehe durch Betätigung der Hubeinrichtung 41 der nun leere Düsenhalter 34 nach unten bewegt wird und sich damit eine Situation ergibt, welche der Situation gemäß Figur 4 entspricht.

Nach dem Entriegeln des Magazinrevolvers 38 in Drehrichtung und nach dem Herstellen einer Antriebsverbindung zwischen dem Magazinrevolver 28 und dem Antriebsmotor 29 der Düsenwechseleinrichtung 26 wird der Antriebsmotor 29 der Düsenwechseleinrichtung 26 betätigt und dadurch der Magazinrevolver 28 um die Revolverdrehachse 30 in eine Drehstellung bewegt, bei welcher die Blindstation 32 erneut unterhalb der Durchtrittsöffnung 23 der Werkstückauflage 15 liegt. Gleichzeitig mit der Dreheinstellung des Magazinrevolvers 28 verfährt die Werkstückauflage 15 in Richtung des Doppelpfeils 14 aus der in Figur 8 dargestellten Position in die Position gemäß Figur 2. Abschließend wird die falltürartige Doppelklappe 16 durch Verschwenken des gestellseitigen Flügels 44 sowie des auflagerseitigen Flügels 46 geschlossen und der Laserbearbeitungskopf wird in Richtung der Z-Achse in seine Ausgangslage angehoben. Die Schneidstation der Laserbearbeitungsmaschine 1 befindet sich damit wieder in dem für die schneidende Werkstückbearbeitung vorgesehenen Funktionszustand gemäß Figur 2. Die Düsenwechseleinrichtung 26 nimmt gegenüber dem Laserschneidkopf 5 erneut ihre Parkposition ein.

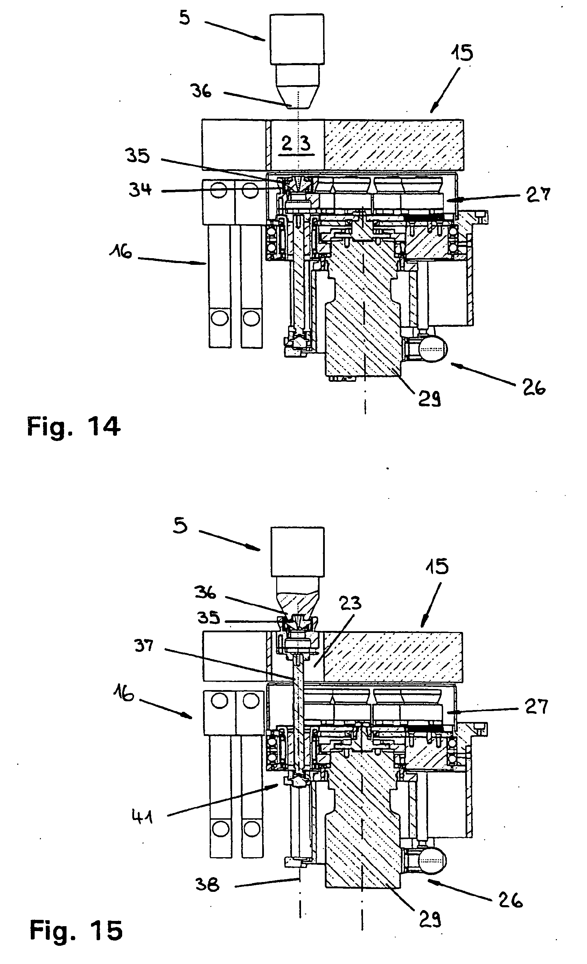

Die Anordnung gemäß den Figuren 9 bis 15 kann an der Laserbearbeitungsmaschine 1 anstelle der Anordnung gemäß den Figuren 2 bis 8 vorgesehen sein. Übereinstimmende Bezugszeichen sind einander entsprechenden Bauteilen zugeordnet.

Abweichend von den zuvor beschriebenen Verhältnissen ist gemäß den Figuren 9 bis 15 die falltürartige Doppelklappe 16 im geöffneten Zustand gegenüber der Werkstückauflage 15 in vertikaler Richtung (Doppelpfeil 49 in Figur 2) beweglich. Außerdem ist der auflageseitige Flügel 46 der falltürartigen Doppelklappe 16 (wie in Figur 9 gestrichelt angedeutet) an die Düsenwechseleinrichtung 26 angebunden und gemeinsam mit dieser relativ zu der Werkstückauflage 15 in Richtung des Doppelpfeils 14 verschiebbar. Infolgedessen kann die Werkstückauflage 15 die falltürartige Doppelklappe 16 überfahren und dadurch die an der Werkstückauflage 15 geführte Düsenwechseleinrichtung 26 ausgehend von den Verhältnissen gemäß Figur 2 besonders weit nach links zu dem Laserbearbeitungskopf 5 hin zustellen.

Zur Höheneinstellung der falltürartigen Doppelklappe 16 dient ein in Figur 9 angedeuteter vertikaler Zustellantrieb 50. Mittels eines in Figur 9 gleichfalls nur andeutungsweise dargestellten horizontalen Zustellantriebes 51 werden der auflageseitige Flügel 46 der falltürartigen Doppelklappe 16 und die Düsenwechseleinrichtung 26 relativ zu der Werkstückauflage 15 in horizontaler Richtung bewegt.

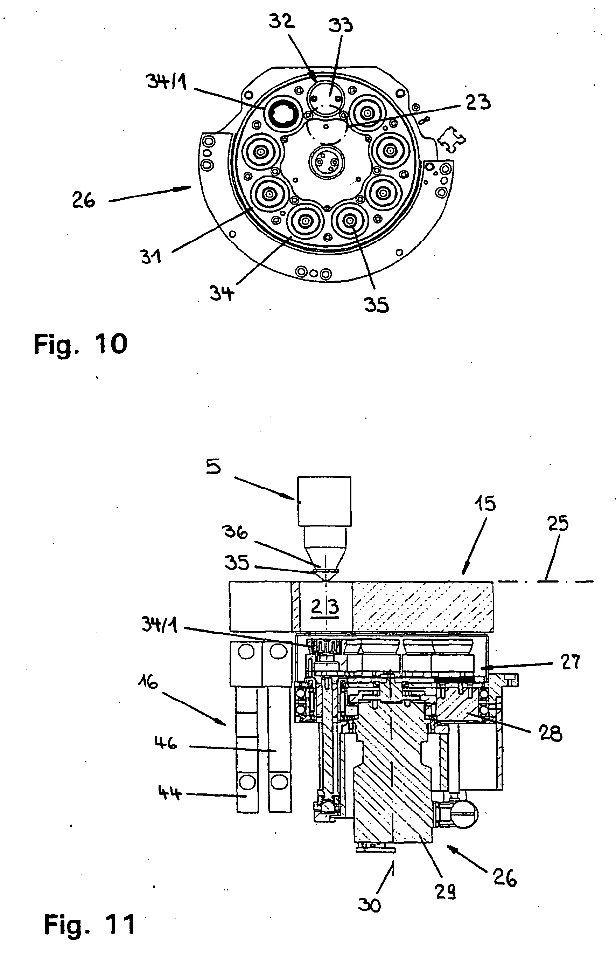

Figur 9 zeigt die Verhältnisse bei regulärem Schneidbetrieb. Die falltürartige Doppelklappe 16 ist geschlossen und fluchtet an ihrer Oberseite mit der Oberseite der Werkstückauflage 15. Die unter der Werkstückauflage 15 angeordnete Düsenwechseleinrichtung 26 nimmt gegenüber dem Laserschneidkopf 5 ihre Parkposition ein und befindet sich in dem Funktionszustand gemäß Figur 10. Dementsprechend ist die Düsenwechseleinrichtung 26 gegenüber der Werkstückauflage 15 derart positioniert, dass die Blindstation 32 des Düsenmagazins 27 in Richtung des Doppelpfeils 14 gegenüber der Durchtrittsöffnung 23 der Werkstückauflage 15 versetzt angeordnet ist. Der Querschnitt der Durchtrittsöffnung 23 an der Werkstückauflage 15 und der Querschnitt des Durchlasskanals 33 an der Blindstation 32 überdecken sich teilweise. Beim Schneidbetrieb anfallende Verschmutzungen, beispielsweise Schlacke- oder Metallspritzer, können die Durchtrittsöffnung 23 der Werkstückauflage 15 unter Schwerkraftwirkung durchsetzen und gelangen dann entweder auf die Oberseite einer nicht im Einzelnen gezeigten Abdeckung der Düsenwechseleinrichtung 26 oder passieren unmittelbar den Durchlasskanal 33 der Blindstation 32 nach unten.

Zum Düsenwechsel an dem Laserschneidkopf 5 wird zunächst die falltürartige Doppelklappe 16 geöffnet und im geöffneten Zustand mittels des vertikalen Zustellantriebes 50 unter die Werkstückauflage 15 abgesenkt. Anschließend werden der auflageseitige Flügel 46 der falltürartigen Doppelklappe 16 und die Düsenwechseleinrichtung 26 mittels des horizontalen Zustellantriebes 51 gemeinschaftlich gegenüber der Werkstückauflage 15 in horizontaler Richtung verschoben. Dabei werden der genannte Flügel der falltürartigen Doppelklappe 16 und die Düsenwechseleinrichtung 26 relativ zu der Werkstückauflage 15 aus der Position gemäß Figur 9 nach rechts in die Position gemäß Figur 11 bewegt. Am Ende dieser Zustellbewegung liegt zunächst die Blindstation 32 des Düsenmagazins 27 mit ihrem gesamten Querschnitt innerhalb des Querschnitts der Durchtrittsöffnung 23 an der Werkstückauflage 15. Verschmutzungen, die sich zuvor an der Oberseite der Abdeckung der Düsenwechseleineinrichtung 26 abgelagert haben, werden bei der von der Düsenwechseleinrichtung 26 gegenüber der Werkstückauflage 15 ausgeführten Bewegung durch den Rand der Durchtrittsöffnung 23 an der Werkstückauflage 15 von der Abdeckung abgestreift und gelangen dadurch in den Bereich der Öffnung des Durchlasskanals 33 an der Blindstation 32. Unter Schwerkraftwirkung treten diese Verschmutzungen dann nach unten durch den Durchlasskanal 33 der Blindstation 32 aus dem Arbeitsbereich der Laserbearbeitungsmaschine 1 aus. Der Laserschneidkopf 5 wird in vertikaler Richtung aus der Lage gemäß Figur 9 in die Lage gemäß Figur 11 abgesenkt. Die Spitze der Laserdüse 35 an dem Laserschneidkopf 5 liegt nun auf Höhe der Werkstück-Auflageebene 25.

Bereits während der Relativbewegung des auflageseitigen Flügels 46 der falltürartigen Doppelklappe 16 und der Düsenwechseleinrichtung 26 einerseits und der Werkstückauflage 15 andererseits wird die Werkstückauflage 15 mittels des Auflageantriebes 48 gemeinschaftlich mit dem auflageseitigen Flügel 46 der falltürartigen Doppelklappe 16 und der Düsenwechseleinrichtung 26 ausgehend von der Position gemäß Figur 9 nach links verschoben, bis die Durchtrittsöffnung 23 der Werkstückauflage 15 unter dem Laserschneidkopf 5 zu liegen kommt und die Düsenwechseleinrichtung 26 ihre Wechselposition unter der zu demontierenden Laserdüse 35 einnimmt. Mit dieser Bewegung zeitlich überlappend wird der Magazinrevolver 28 des Düsenmagazins 27 durch den Antriebsmotor 29 um die Revolverdrehachse 30 gedreht, bis der leere Düsenhalter 34/1 des Düsenmagazins 27 unter der Durchtrittsöffnung 23 der Werkstückauflage 15 angeordnet ist. Es ergibt sich damit die Situation gemäß Figur 11.

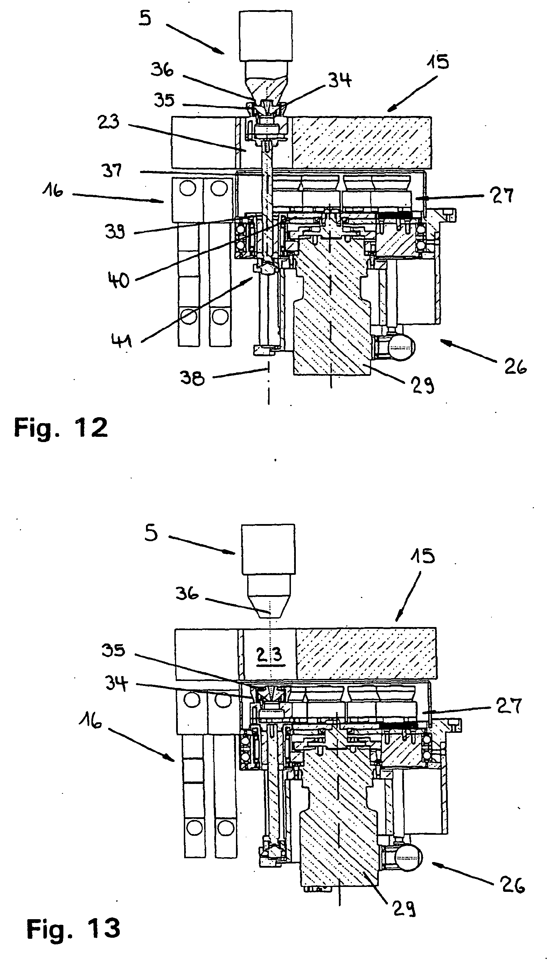

Ausgehend von den Verhältnissen gemäß Figur 11 wird der Düsenwechsel wie zuvor anhand der Figuren 4 bis 8 beschrieben, durchgeführt (Figuren 12 bis 15). Nach Abschluss des Düsenwechsels werden durch Verschieben der Werkstückauflage 15 relativ zu dem Laserschneidkopf 5, durch Verschieben des auflageseitigen Flügels 46 der falltürartigen Doppelklappe 16 und der Düsenwechseleinrichtung 26 relativ zu der Werkstückauflage 15 sowie durch Anheben und Schließen der falltürartigen Doppelklappe 16 und Anheben des Laserschneidkopfes 5 die Verhältnisse gemäß Figur 9 wiederhergestellt.

Sowohl im Falle der Abläufe gemäß den Figuren 2 bis 8 als auch im Falle der Abläufe gemäß den Figuren 9 bis 15 kann der Laserschneidkopf 5 bei entsprechender Beweglichkeit zusätzlich zu der Werkstückauflage 15 in Richtung des Doppelpfeils 14 zugestellt werden und dadurch einen Teil der in dieser Richtung erforderlichen Zustellbewegung zwischen Laserschneidkopf 5 und Düsenwechseleinrichtung 26 übernehmen.

## Patentansprüche

1. Laserbearbeitungsmaschine zum Bearbeiten von Werkstücken, insbesondere von Blechen (19),
• mit einem Laserbearbeitungskopf (5), der eine Düsenaufnahme (36) für eine Laserdüse (35) aufweist,
• mit einer Werkstückauflage (15) für zu bearbeitende und/oder für bearbeitete Werkstücke, die eine Werkstück-Auflageebene (25) ausbildet sowie
• mit einer Düsenwechseleinrichtung (26), die ein Düsenmagazin (27) mit wenigstens einem Düsenlagerplatz (31) für eine Laserdüse (35) umfasst und die an der von dem Laserbearbeitungskopf (5) abliegenden Seite (Unterseite) der Werkstück-Auflageebene (25) angeordnet ist,
wobei eine Laserdüse (35) zwischen dem Düsenmagazin (27) der Düsenwechseleinrichtung (26) und der Düsenaufnahme (36) des Laserbearbeitungskopfes (5) transferierbar und an der Düsenaufnahme (36) montierbar oder demontierbar ist,
**dadurch gekennzeichnet, dass**
die Werkstückauflage (15) Oberhalb der Düsenwechseleinrichtung (26) eine Durchtrittsöffnung (23) aufweist, durch welche eine Laserdüse (3) in Querrichtung der Werkstück-Auflageebene (25) zum Düsenwechsel bewegbar ist.

2. Laserbearbeitungsmaschine nach Anspruch 1, **dadurch gekennzeichnet, dass** die Düsenwechseleinrichtung (26) eine Handlingeinrichtung umfasst, mittels derer eine Laserdüse (35) zwischen dem Düsenmagazin (27) der Düsenwechseleinrichtung (26) und der Düsenaufnahme (36) des Laserbearbeitungskopfes (5) transferierbar ist.

3. Laserbearbeitungsmaschine nach einem der vorhergehenden Ansprüche, **dadurch gekennzeichnet, dass** die Werkstückauflage (15) und der Laserbearbeitungskopf (5) relativ zueinander bewegbar sind und dass die Düsenwechseleinrichtung (26) aufgrund einer Relativbewegung von Werkstückauflage (15) und Laserbearbeitungskopf (5) gegenüber dem Laserbearbeitungskopf (5) in eine Wechselposition und/oder in eine Parkposition bewegbar ist.

4. Laserbearbeitungsmaschine nach einem der vorhergehenden Ansprüche, **dadurch gekennzeichnet, dass** die Werkstückauflage (15) relativ zu dem Laserbearbeitungskopf (5) bewegbar ist und dass die Düsenwechseleinrichtung (26) mit der Werkstückauflage (15) bewegungsverbunden und durch eine Bewegung der Werkstückauflage (15) relativ zu dem Laserbearbeitungskopf (5) in eine Wechselposition und/oder in eine Parkposition gegenüber dem Laserbearbeitungskopf (5) bewegbar ist.

5. Laserbearbeitungsmaschine nach einem der vorhergehenden Ansprüche, **dadurch gekennzeichnet, dass** die Düsenwechseleinrichtung (26) durch einen Auflageantrieb (48) der Werkstückauflage (15) in eine Wechselposition und/oder in eine Parkposition bewegbar ist, mittels dessen die Werkstückauflage (15) gemeinsam mit einer Einrichtung (46) zum Ausschleusen von Produkten der Werkstückbearbeitung relativ zu dem Laserbearbeitungskopf (5) bewegbar ist.

6. Laserbearbeitungsmaschine nach einem der vorhergehenden Ansprüche, **dadurch gekennzeichnet, dass** die Düsenwechseleinrichtung (26) mit der Werkstückauflage (15) verbunden ist.

7. Laserbearbeitungsmaschine nach einem der vorhergehenden Ansprüche, **dadurch gekennzeichnet, dass** die Düsenwechseleinrichtung (26) relativ zu der Werkstückauflage (15) bewegbar ist.

8. Laserbearbeitungsmaschine nach einem der vorhergehenden Ansprüche, **dadurch gekennzeichnet, dass** mittels der Handlingeinrichtung eine Laserdüse (35) in Querrichtung der Werkstück-Auflageebene (25) zwischen dem Düsenmagazin (27) der Düsenwechseleinrichtung (26) und der Düsenaufnahme (36) des Laserbearbeitungskopfes (5) transferierbar ist.

9. Laserbearbeitungsmaschine nach einem der vorhergehenden Ansprüche, **dadurch gekennzeichnet, dass** mittels der Handlingeinrichtung eine Laserdüse (35) durch die Werkstück-Auflageebene (25) hindurch zwischen dem Düsenmagazin (27) der Düsenwechseleinrichtung (26) und der Düsenaufnahme (36) des Laserbearbeitungskopfes (5) transferierbar ist.

## Claims

1. Laser processing machine for processing workpieces, in particular metal sheets (19),
• having a laser processing head (5) which has a nozzle receiving member (36) for a laser nozzle (35),
• having a workpiece support (15) for workpieces which are intended to be processed and/or for processed workpieces which forms a workpiece support plane (25) and
• having a nozzle changing device (26) which comprises a nozzle magazine (27) having at least one nozzle storage location (31) for a laser nozzle (35) and which is arranged at the side (lower side) of the workpiece support plane (25) remote from the laser processing head (5),
with a laser nozzle (35) being able to be transferred between the nozzle magazine (27) of the nozzle changing device (26) and the nozzle receiving member (36) of the laser processing head (5) and being able to be assembled on or disassembled from the nozzle receiving member (36), **characterised in that**
the workpiece support (15) has a through-opening (23) above the nozzle changing device (26), through which through-opening (23) a laser nozzle (35) can be moved for the purpose of nozzle changing in a transverse direction of the workpiece support plane (25).

2. Laser processing machine according to claim 1, **characterised in that** the nozzle changing device (26) comprises a handling device, by means of which a laser nozzle (35) can be transferred between the nozzle magazine (27) of the nozzle changing device (26) and the nozzle receiving member (36) of the laser processing head (5).

3. Laser processing machine according to either of the preceding claims, **characterised in that** the workpiece support (15) and the laser processing head (5) can be moved relative to each other, and **in that** the nozzle changing device (26) can be moved, relative to the laser processing head (5), into a changing position and/or into a park position by means of a relative movement of the workpiece support (15) and the laser processing head (5).

4. Laser processing machine according to any one of the preceding claims, **characterised in that** the workpiece support (15) can be moved relative to the laser processing head (5), and **in that** the nozzle changing device (26) is connected to the workpiece support (15) in terms of movement and can be moved into a changing position and/or into a park position relative to the laser processing head (5) by the workpiece support (15) being moved.

5. Laser processing machine according to any one of the preceding claims, **characterised in that** the nozzle changing device (26) can be moved into a changing position and/or into a park position by a support drive (48) of the workpiece support (15), by means of which the workpiece support (15) can be moved relative to the laser processing head (5) together with a device (46) for discharging products of the workpiece processing operation.

6. Laser processing machine according to any one of the preceding claims, **characterised in that** the nozzle changing device (26) is connected to the workpiece support (15).

7. Laser processing machine according to any one of the preceding claims, **characterised in that** the nozzle changing device (26) can be moved relative to the workpiece support (15).

8. Laser processing machine according to any one of the preceding claims, **characterised in that** a laser nozzle (35) can be transferred by means of the handling device in a transverse direction of the workpiece support plane (25) between the nozzle magazine (27) of the nozzle changing device (26) and the nozzle receiving member (36) of the laser processing head (5).

9. Laser processing machine according to any one of the preceding claims, **characterised in that** a laser nozzle (35) can be transferred by means of the handling device through the workpiece support plane (25) between the nozzle magazine (27) of the nozzle changing device (26) and the nozzle receiving member (36) of the laser processing head (5).

## Revendications

1. Machine d'usinage au laser pour l'usinage de pièces, en particulier de tôles (19),
- avec une tête d'usinage au laser (5), qui présente un logement de tuyère (36) pour une tuyère laser (35),
- avec un support de pièce (15) pour des pièces à usiner et/ou usinées, qui forme un plan de support de pièce (25),
- et avec un dispositif de changement de tuyère (26), qui comprend un magasin de tuyères (27) avec au moins un emplacement de stockage de tuyère (31) pour une tuyère laser (35), et qui est disposé sur le côté (coté inférieur) du plan de support de pièce (25) qui est éloigné de la tête d'usinage au laser (5),
sachant qu'une tuyère laser (35) peut être transférée entre le magasin de tuyères (27) du dispositif de changement de tuyère (26) et le logement de tuyère (36) de la tête d'usinage au laser (5), et peut être montée sur le logement de tuyère (36) ou en être démontée,
**caractérisée en ce que** le support de pièce (15) présente, au-dessus du dispositif de changement de tuyère (26), une ouverture de passage (23) à travers laquelle une tuyère laser (35) peut être déplacée, pour le changement de tuyère, dans la direction transversale du plan de support de pièce (25).

2. Machine d'usinage au laser selon la revendication 1, **caractérisée en ce que** le dispositif de changement de tuyère (26) comprend un dispositif de manutention au moyen duquel une tuyère laser (35) peut être transférée entre le magasin de tuyères (27) du dispositif de changement de tuyère (26) et le logement de tuyère (36) de la tête d'usinage au laser (5).

3. Machine d'usinage au laser selon l'une des revendications précédentes, **caractérisée en ce que** le support de pièce (15) et la tête d'usinage au laser (5) sont mobiles l'un par rapport à l'autre, et **en ce que** le dispositif de changement de tuyère (26) peut être déplacé par rapport à la tête d'usinage au laser (5) dans une position de changement et/ou dans une position de rangement par un mouvement relatif du support de pièce (15) et de la tête d'usinage au laser (5).

4. Machine d'usinage au laser selon l'une des revendications précédentes, **caractérisée en ce que** le support de pièce (15) est mobile par rapport à la tête d'usinage au laser (5), et **en ce que** le dispositif de changement de tuyère (26) est lié en déplacement au support de pièce (15) et peut être déplacé par rapport à la tête d'usinage au laser (5) dans une position de changement et/ou dans une position de rangement par un mouvement du support de pièce (15) par rapport à la tête d'usinage au laser (5).

5. Machine d'usinage au laser selon l'une des revendications précédentes, **caractérisée en ce que** le dispositif de changement de tuyère (26) peut être déplacé dans une position de changement et/ou dans une position de rangement par un entraînement de support (48) du support de pièce (15), au moyen duquel le support de pièce (15) peut être déplacé par rapport à la tête d'usinage au laser (5) conjointement avec un dispositif (46) pour évacuer des produits de l'usinage de pièces.

6. Machine d'usinage au laser selon l'une des revendications précédentes, **caractérisée en ce que** le dispositif de changement de tuyère (26) est relié au support de pièce (15).

7. Machine d'usinage au laser selon l'une des revendications précédentes, **caractérisée en ce que** le dispositif de changement de tuyère (26) est mobile par rapport au support de pièce (15).

8. Machine d'usinage au laser selon l'une des revendications précédentes, **caractérisée en ce qu'**au moyen du dispositif de manutention, une tuyère laser (35) peut être transférée entre le magasin de tuyères (27) du dispositif de changement de tuyère (26) et le logement de tuyère (36) de la tête d'usinage au laser (5) dans la direction transversale du plan de support de pièce (25).

9. Machine d'usinage au laser selon l'une des revendications précédentes, **caractérisée en ce qu'**au moyen du dispositif de manutention, une tuyère laser (35) peut être transférée entre le magasin de tuyères (27) du dispositif de changement de tuyère (26) et le logement de tuyère (36) de la tête d'usinage au laser (5) en traversant le plan de support de pièce (25).
